# EUROPEAN PATENT APPLICATION

(11) **EP 2 716 350 A1**
(43) Date of publication of application: **09.04.2014**
(21) Application number: 12306223.4
(22) Date of filing: 08.10.2012
(51) Int. Cl.: B01D 53/62, B01D 53/96

(54) **CO2 depleted syngas production using magnesium based sorbent**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Grover, Bhadra S., Sugar Land, TX Texas 77479 (US); Monereau, Christian, 34000 Monpellier (FR)
(74) Representative: Beroud, Amandine

(57) **Abstract**

The present invention relates to an energy efficient process for recovering a high pressure and high temperature carbon dioxide stream from a syngas by utilizing magnesium based sorbent. The CO₂ capture is made in fixed sorbent beds or through the transport of the sorbent from one reactor (adsorber) to the others. The CO₂ depleted syngas feeds a hydrogen production unit and/or a hydrogen/carbon monoxide production unit.

## Description

The present invention relates to an energy efficient process for recovering a high pressure and high temperature carbon dioxide stream from a syngas by utilizing magnesium based sorbent. The CO₂ capture is made in fixed sorbent beds or through the transport of the sorbent from one reactor (adsorber) to the others. The CO₂ depleted syngas feeds a hydrogen production unit and/or a hydrogen/carbon monoxide production unit.

Syngas is generally produced as a feed for a hydrogen production unit, and/or for a carbon monoxide production unit, and/or for the production of mixture(s) of hydrogen and carbon monoxide with specified H₂/CO ratios.

Hydrogen is an important feedstock for many chemical and petrochemical processes. However, hydrogen production is associated with large amounts of carbon dioxide (CO₂) emissions. Accordingly, it is desirable to not only provide a means to produce hydrogen but also a means to recover the carbon dioxide associated with the hydrogen production. With increased emission regulations and a possible future CO₂ tax there is a need to develop carbon dioxide capture solutions. The cost of capture can impact the cost of hydrogen production. Therefore, it is important to develop a solution with lower cost of capture and improved efficiency of hydrogen production plant.

In hydrogen plants, carbon dioxide can be captured from several different locations in the process train. Carbon dioxide from process gas can be captured from high pressure syngas before H2 pressure swing adsorption unit or from pressure swing adsorption off-gas. Solvent scrubbing processes such as the amine scrubbing process have been used to remove the carbon dioxide present in high pressure syngas. CO₂ PSA and CO₂ VPSA upstream or downstream the hydrogen PSA (feed or off-gas) have also been proposed to capture most of the CO₂. The concentration of carbon dioxide in the H2 pressure swing adsorption off-gas being increased, this off-gas is more suitable for cryogenic separation for CO₂ recovery. Whatever the location of the CO₂ capture unit and the process, all these solutions are expensive and energy consumptive.

When the intent is to produce a hydrogen/carbon monoxide gas mixture, or carbon monoxide on one hand and hydrogen on the other hand, the carbon dioxide present in the stream must be removed from the mixture. A number of different processes for carbon dioxide removal from the gas mixture have also been proposed over the years for that application but most result at the end in a low pressure/low temperature carbon dioxide stream. For example, solvent scrubbing processes such as the amine scrubbing process have been used to remove the carbon dioxide present in hydrogen/carbon monoxide production processes but the amine process requires gas cooling to a temperature from about 40°C to about 70°C thereby resulting in a loss of thermal efficiency and a carbon dioxide product that is at low pressure/low temperature.

In the traditional hydrogen/carbon monoxide process, it is often desirable to recycle a portion of the carbon dioxide recovered to the steam hydrocarbon reformer unit to be further treated in order to maximize the production of carbon monoxide over hydrogen and carbon dioxide. As the carbon dioxide product stream is at low pressure/low temperature, it must be compressed to the pressure range of the hydrocarbon feed stream that is being introduced into the steam hydrocarbon reformer unit before it can be recycled. Accordingly, processes such as the one detailed above are not only capital intensive (due to the need for a compressor) but also energy intensive (due to the loss of thermal efficiency).

A variety of new sorbents have been proposed for the removal of carbon dioxide. For example, the publication "Reduction in the Cost of Pre-combustion CO₂ Capture through Advancements in Sorption-enhanced Water-gas-shift" by Andrew Wright, et al describes a process for carbon dioxide capture using K₂CO₃ promoted hydrotalcite. The carbon dioxide stream produced is at low pressure, and any steam in the carbon dioxide product stream is lost during cooling of the carbon dioxide stream upstream of carbon dioxide compression.

In another example, the publication "Novel Regenerable Magnesium Hydroxide Sorbent for CO2 Capture at Warm Gas Temperatures" (Ind. Eng. Chem. Res. 2009, 48, 2135-2141; Rajani V Siriwardane and R.W Stevens of NETL; hereinafter "Novel Regenerable Magnesium Hydroxide Sorbent for CO2 Capture") describes a sorbent based on Mg(OH)₂ that can capture carbon dioxide at temperatures from 200°C to 315°C and can release carbon dioxide and be regenerated at a temperature from 375°C to 400°C in the presence of steam. The noted article indicates that this sorbent may be used in applications such as carbon dioxide capture from coal gasification syngas. These sorbents produce carbon dioxide/steam streams at elevated pressure and temperature. However, it does not teach how to utilize efficiently these hot carbon dioxide and steam mixture(s) produced during the regeneration of the sorbent. The loss of the energy contained in these streams decreases dramatically the interest of such processes.

So, a problem is to find an improved process utilizing at least a part of the hot carbon dioxide and steam mixture(s) produced during the regeneration of the sorbent in order to decrease the cost and the energy consumption of the global system.

Accordingly, a solution of the invention is a process for recovering and using a high pressure and high temperature carbon dioxide and steam mixture(s) during hydrogen and/or carbon monoxide and/or hydrogen-carbon monoxide production from one or more hydrocarbon feed streams. In the context of the invention, high pressure corresponds to a pressure of at least 10 bar abs, generally that ranges from about 10 bar abs to about 40 bar abs, more typically from about 15 to about 35 bar abs.

More precisely, the pressure of the carbon dioxide and steam mixture(s) is preferentially at a pressure approximatively the same than the pressure of the feed at the inlet of the syngas producing unit 3. By"approximatively the same", one means that the two pressures are within a 20 % range defined by Pmax/Pmin < 1.2, for instance 30 bar abs for the feed and 25 to 35 bar abs for the CO₂/ steam stream. This will allow for the CO₂ stream (and/or according to the process, to other CO₂/ steam mixtures) to flow to the steam hydrocarbon reformer units without any additional compression or with a limited compression. Those skilled in the art will recognize that the pressure at which syngas is produced will depend upon the actual process being utilized for the syngas producing unit 3. For example, in some processes, the pressure can be as low as 5 bar abs but more generally, the steam hydrocarbon reforming -which is the most usual process- takes place at a pressure that ranges from 10 bar to 40 bar abs, more typically from 15 to 35 bar abs.

In the context of the invention, high temperature means a temperature equal to or higher than 200°C, preferentially in the range 250 to 420°C. Depending on the details of the sorption cycle and on the sorbent, this temperature can reach 450°C.

Pressure and temperature of the CO₂ stream -and more generally of the streams issued from unit 6 during the regeneration of the sorbent and recycled to unit 3- correspond to the point where this stream is recovered from the sorbent bed. Pressure and temperature at the recycle point could be different due to thermal or hydraulic losses, to additional compression (or expansion), to heat exchangers...

A solution of the invention is a process for recovering a carbon dioxide stream during hydrogen and/or carbon monoxide and/or hydrogen-carbon monoxide mixture(s) production, said process comprising:
(i) the introduction of one or more hydrocarbon feed streams into a syngas producing unit (3) to generate a syngas stream that contains at least hydrogen, carbon monoxide, carbon dioxide and water vapor;
(ii) the treatment of the syngas stream in a carbon dioxide removal unit (6) with a magnesium based sorbent to produce a CO₂ depleted hydrogen/carbon monoxide gaseous stream, the treatment involving:
   - a sorption phase (a) in which the syngas stream and the magnesium based sorbent are put in contact at a temperature from 100°C to 315°C and a pressure from 10 to 40 bar abs, preferably at a temperature from 180°C to 300°C and at a pressure from 15 to 35 bar abs, the carbon dioxide in the syngas stream selectively reacting with the sorbent and the remaining components of the syngas stream non specifically reacting with the sorbent producing a CO₂ depleted hydrogen/carbon monoxide gaseous stream,
   - a carbon dioxide release phase (c) in which the sorbent is put in contact with superheated steam, to raise the temperature of the sorbent in the range 350°C / 420°C thereby allowing for the release of the carbon dioxide from the sorbent to produce a carbon dioxide deficient sorbent and a wet carbon dioxide stream;
   - a rehydroxylation phase (d) in which the carbon dioxide deficient sorbent temperature is lowered to a temperature between 200°C and 300°C and is contacted with steam and/or a moisture containing steam to allow for the rehydroxylation of the sorbent, the rehydroxylated sorbent being then used again for a new sorption phase;
wherein at least a stream containing CO₂ and/or steam is produced in unit (6) at a pressure above 10 bar abs and a temperature above 200°C and is recycled to the syngas producing unit (3).

These particular process characteristics for the potentially recycled streams are defined hereunder in the text as "high pressure and high temperature".

The stream which is recycled in the syngas producing unit could be
- the totality or a part of the stream released during the carbon dioxide release phase (c), i.e. essentially a mixture of CO₂ and steam, the relative concentration of these components being variable during the phase, with some amount of the other components of the syngas ;
- the totality or a part of the stream issued during the purge phase (b) if any i.e. a mixture of steam and of components of the synga ;
- the totality or a part of the stream issued during the rehydroxylation phase (d).
   The composition of this stream will depend on the wet stream used during that phase (d). Nevertheless, it will contain steam and some CO₂;
- or any mixture of these streams.

These streams or their mixtures will be called under the general wording " CO₂ and steam mixtures" or "CO ₂/steam stream" whatever their real precise composition.

By "part of the stream" recycled, one does not mean that a constant % of the stream is recycled but more generally that the stream is not recycled in its totality during the duration of the phase in which it is produced. The recycle fraction, from 0% to 100%, can change along the phase according to its composition, pressure, temperature... (for instance, the stream going out during the purge phase will contain at the beginning essentially the component trapped in the void ( H₂, CO, CH₄...) and will be essentially steam at the end of the phase; only the gas produced at beginning or on the contrary at the end could be recycled depending on the process)

One should note also that the wording "hydrogen/carbon monoxide stream" used to define the syngas stream depleted in carbon dioxide does not mean that the composition of this stream is limited to carbon dioxide residual, CO and H₂. This stream can contain a few % of methane, nitrogen, water and traces of several components (hydrocarbons, alcohols, sulfur compounds...).

With these definitions, the present invention provides a process that allows for the economical production of an hydrogen/carbon monoxide stream by recycling at least a part of the "carbon dioxide and steam mixture(s)" at" high pressure and high temperature", and optionally heat produced from the CO₂ removal unit in the syngas producing unit, resulting in an overall process that is efficient from a cost and energy standpoint.

According to particular embodiments of the present invention, the process is characterized by one or more following characteristics:
- the treatment of the syngas stream comprises a purge phase (b) between the phase (a) and the phase (c), in which the reacted sorbent is swept by a stream in order to purge the reacted sorbent of the non specifically trapped components from the syngas stream thereby producing a purge effluent gas;
- at least a portion of the wet carbon dioxide stream is recycled to the syngas producing unit, preferentially in the feed stream.
- at least a portion of the purge effluent gas is recycled to the syngas producing unit, preferentially in the feed stream.
- at least a portion of the effluent gas from the rehydroxylation phase is recycled to the syngas producing unit, preferentially in the feed stream.
- the optional purge stream used to sweep the sorbent is steam and/or a portion of the carbon dioxide stream.
- the stream which is recycled from unit 6 to the syngas producing unit 3 is produced at a pressure that ranges from 10 bar to 40 bar abs, preferentially from 15 to 35 bar abs.
- the stream which is recycled from unit 6 to the syngas producing unit 3 is produced at a pressure approximatively the same than the pressure of the feed at the inlet of the syngas producing unit 3, the two pressures being within a 20 % range defined as Pmax/Pmin< 1.2
- the stream which is recycled from unit 6 to the syngas producing unit 3 is produced at a temperature in the range 250 to 420°C.
- heat is exchanged between the carbon dioxide removal unit 6 and the syngas producing unit 6 through a heat transfer media, preferentially this heat transfer media being an inorganic or organic compound with a boiling point that ranges about 250°C to about 350°C, more preferentially this heat transfer media being a molten carbonate salt mixture.
- the syngas producing unit is selected from a steam hydrocarbon reformer unit, preferentially a steam methane reformer unit, an autothermal reformer unit, and a partial oxidation unit or a combination of these units.
- the magnesium based sorbent used in the sorbent beds is magnesium hydroxide.
- the pressure is approximatively the same, within a maximum difference of 2 bar, in all sorbent beds.
- at least one and preferably each of the sorbent beds includes means for heating and cooling the sorbent bed.
- the sorbent is placed in several fixed beds and the different streams are successively and cyclically directed through the different beds according to phases (a) to (d).
- the sorbent is transported successively and cyclically into different adsorbers according to phases (a) to (d).
- the CO₂ depleted hydrogen/carbon monoxide gaseous stream is further treated to separate at least partly the hydrogen from the carbon monoxide using a hydrogen/carbon monoxide separation unit selected from a hydrogen pressure swing adsorption unit, a CO pressure swing adsorption unit, a membrane unit or a cryogenic purification unit, or a combination of these to produce high purity hydrogen and/or high purity carbon monoxide and/or hydrogen-carbon monoxide mixture at the required H₂/CO ratio.
   Figure 1 provides a schematic of the process of the present invention.
   Figure 2 corresponds to the use of fixed beds for the adsorption
   Figure 3 corresponds to the use of a moving sorbent for the adsorption

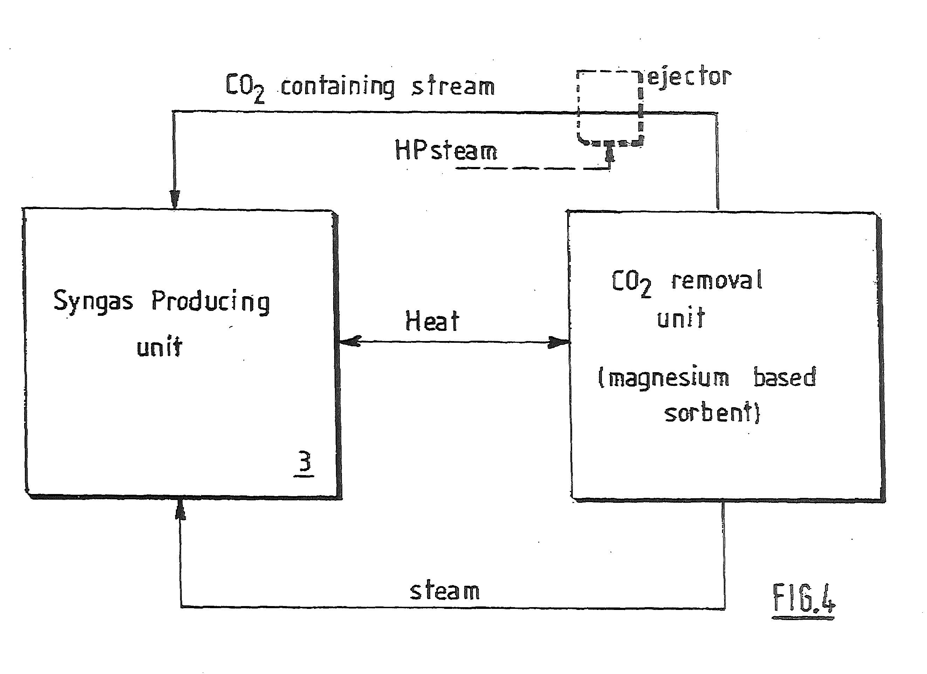

   Figure 4 summarizes the main characteristics of the Invention

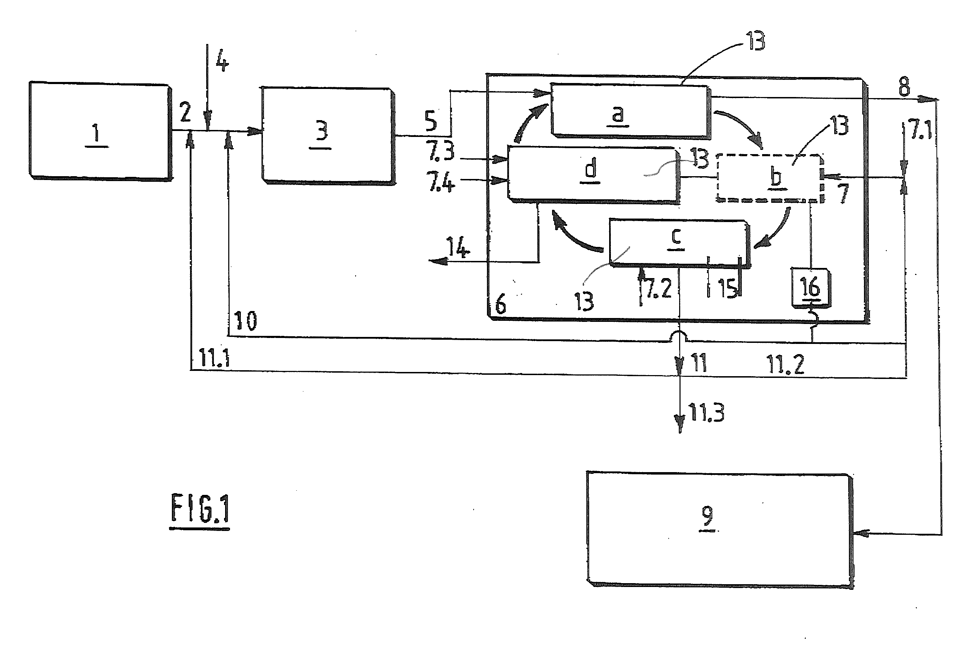

The process will be further described in more detail with reference to Figure 1 contained herein. Note that this figure is not meant to be limiting with regard to the present process and is included simply for non-limiting illustrative purposes. The first step in the present process, as shown in Figure 1, involves the generation of a syngas which can be a hydrogen rich effluent (about 70% mole of H₂) or a hydrogen/ carbon monoxide rich effluent (30 to 60% for both components) depending on the final required production (hydrogen, carbon monoxide, mixture of these components). This syngas is obtained by the treatment of one or more hydrocarbon feed streams in a syngas producing unit 3, the one or more hydrocarbon feed streams being obtained from a hydrocarbon source 1 via line 2.

Syngas producing unit 3 could a reformer unit (preferably a steam methane reformer unit), an auto thermal reformer unit, a partial oxidation unit or a combination of several units of these types.

Steam hydrocarbon reforming, auto thermal reforming , partial oxidation and the conditions under which each of these treatments are carried out for the treatment of the hydrocarbons in the hydrocarbon feed streams are known to those skilled in the art and accordingly will not be discussed herein in great detail. Therefore, the present invention is not meant to be limited by the type of syngas producing unit 3 used or the conditions under which the process is carried out. For purposes of simplicity, the process of the present invention will be discussed furthermore with regard to the steam hydrocarbon reforming unit. Note that this choice is in no way intended to limit the scope of the present invention. The one or more hydrocarbon feed streams are introduced into the steam hydrocarbon reformer unit 3. In addition, in the traditional systems, steam is added via line 4 to the one or more hydrocarbon feed streams upstream of the steam hydrocarbon reformer unit 3. Regardless of the type of reformer unit 3 utilized, the reaction product from the steam hydrocarbon reformer unit 3 is principally a syngas stream that contains at least hydrogen, carbon monoxide, methane, water vapor and carbon dioxide in proportions close to equilibrium amounts at elevated temperature and pressure (hereinafter collectively referred to as "syngas stream").

In the second step of the process of the present invention, the syngas stream obtained from the steam hydrocarbon reformer unit 3 (or the Pox or ATR in other embodiments) is subjected to carbon dioxide removal in order to obtain a hydrogen/carbon monoxide gas mixture.

The actual treatment of the syngas stream in this second step can involve three or four phases: a sorption phase (a), an optional purge phase (b), a carbon dioxide release phase (c), and a rehydroxylation phase (d). When the carbon dioxide need not to be of high purity, for instance when all of the carbon dioxide is to be recycled to the hydrocarbon feed stream as a supplemental feed, it is not necessary to include the purge phase (b) which purpose is to remove the components trapped in the voids, porosities and more generally in the gas phase around the sorbent particles. Typical trapped components are hydrogen, carbon monoxide, methane, depending on the nature of the hydrocarbon feed, nitrogen, and the CO₂ on gas phase which has not reacted with the sorbent.

Accordingly, the syngas stream that is obtained from the steam hydrocarbon reformer unit 3 via line 5 is subjected to treatment in a carbon dioxide removal unit 6 where it is put in contact with a sorbent material 13 (phase a) which retains the carbon dioxide because of the chemical reaction (adsorption) of the carbon dioxide with the sorbent 13.

The sorbent 13 that is utilized in the process of the present invention is highly selective for carbon dioxide and is selected from magnesium based sorbents, more particularly magnesium hydroxide sorbents. Of these sorbents 13, the most preferred with regard to the present process are the magnesium hydroxide sorbent such as those disclosed in U.S. Patent No. 7,314,847 and Novel Regenerable Magnesium Hydroxide Sorbent for CO₂ Capture.

Note that the temperature at which the syngas stream is put in contact with the sorbent will depend upon the specific sorbent 13 utilized as well as the conditions under which the syngas producing reaction is carried out. Typically, the syngas stream will be at a temperature that ranges from 100°C to 315°C and at a pressure that ranges from 10 bar to 40 bar abs, preferably at a temperature that ranges from 180°C to 300°C and at a pressure from 15 bar to 35 bar abs. With regard to this reaction, the sorbent 13 reacts with the carbon dioxide in the syngas stream to produce a carbonate and water. For example, in the case of magnesium hydroxide the reaction is:

Mg (OH)₂ + CO₂ → MgCO₃ + H₂O

The magnesium hydroxide reacts with the carbon dioxide to yield magnesium carbonate and water. While a majority of the carbon dioxide present in the syngas stream will react with the magnesium hydroxide sorbent 13 to form a carbonate, a small amount of the carbon dioxide will remain unreacted. Generally greater than 90% of the carbon dioxide in the syngas stream will be removed from the syngas stream by the sorbent 13, preferably greater than 95% and even more preferably greater than 99%.

The CO₂ depleted syngas exits unit 6 via line 8. More specifically, the essentially carbon dioxide free stream comprises hydrogen or both hydrogen and carbon monoxide in high concentrations. As used herein, the phrase "essentially carbon dioxide free" refers to a stream that contains less than about 3.0 % carbon dioxide, preferably less than about 0.5 % carbon dioxide and even more preferably, less than about 0.1 % carbon dioxide. However, as noted before, those skilled in the art will recognize that these streams often contain residual amounts of other components that may be present in the original syngas stream - such as nitrogen- to be treated as well. Accordingly, as noted hereinbefore, the amount of the other components will typically be present in the residual amount of less than 5.0%, preferably less than 3.0% and even more preferably less than 1.0%.

As noted above, the hydrogen/carbon monoxide gaseous stream obtained in the first phase (the sorption phase) may be withdrawn via line 8 and used as is or it may be further treated in the hydrogen/carbon monoxide separation unit 9. When the hydrogen/carbon monoxide gaseous stream is further treated, it may be further treated in a hydrogen pressure swing adsorption unit, a CO PSA or VPSA, a membrane unit or a cryogenic purification unit, or any combination of these units. The next phase in the treatment of the syngas stream in the carbon dioxide removal unit 6 is the optional purging phase (phase b) of the sorbent 13. As the sorbent 13 becomes saturated due to the carbon dioxide capacity of the sorbent 13 being reached (or almost being reached), the sorbent bed 13 is swept by high pressure superheated steam 7.1 (that is to say that the steam is at least 50°C above its saturation) or by a high purity, high temperature, high pressure CO₂ stream 11.2, injected into sorbent 13 from line 7. Note that at this point, the pressure of the superheated steam or of the CO₂ stream used to purge the sorbent 13 will be such that the purge stream going out of the bed is preferentially at a pressure approximatively the same than the pressure at the inlet of the steam hydrocarbon reformer unit 3. As already defined, by"approximatively the same", one means that the two pressures are within a 20 % range, for instance 30 bar abs for the feed and 25 to 35 bar abs for the purge stream... This will allow for the purge stream obtained to flow to the steam hydrocarbon reformer units without any additional compression or with a limited compression. The superheated steam pressure utilized generally ranges from about 20 bar to about 60 bar abs.

Thus, during the optional purge phase (b), the superheated steam or the high pressure CO₂ injected into the sorbent 13 serves to dislodge a large portion of the remaining components that are trapped or lodged in the void spaces of the sorbent 13, thereby producing a purge effluent gas (also referred to as a purge stream) which contains these dislodged components, plus the steam or CO₂ injected. This purge effluent gas is withdrawn from the sorbent 13 and recycled via line 10 to the hydrocarbon feed stream 2 that is to be introduced into the steam hydrocarbon reformer unit 3. Note that a purge surge drum 16 may also optionally be included along line 10 to allow for the mixing of the purge stream for a more consistent stream. This purge effluent gas which contains hydrogen, carbon monoxide and methane is used as a supplemental feed to maximize the production of hydrogen and carbon monoxide. It is important to control this step as excess temperature will heat up the sorbent 13 and start the release of the carbon dioxide from the sorbent 13 due to the decomposition of the carbonate. For example, MgCO₃ starts decomposition at from about 350°C to about 400 °C depending upon the pressure of the sorbent 13. Those skilled in the art will recognize that higher pressures need higher temperatures for decomposition to start.

The next phase of the treatment in the carbon dioxide removal unit 6, the carbon dioxide release (phase c), provides a high purity carbon dioxide stream that is also "at high pressure and high temperature" (according to the definition of these terms). This is accomplished by increasing the temperature of the sorbent 13. This increase in temperature may be accomplished in different manners. The temperature of the superheated steam stream provided via line 7.2 can be increased or additional heating means such as an indirect heat exchanger 15 may be used to increase the temperature of the sorbent 13 to the range 350°C / 420°C. In each of these cases, the temperature is increased to allow for the release of carbon dioxide from the sorbent 13 thereby producing a carbon dioxide stream that is considered not only hot but also wet. This "high pressure high temperature" carbon dioxide stream is withdrawn from sorbent 13 via line 11. The pressure in the sorbent 13 during this phase c is maintained at the desired pressure, above 10 bar abs, typically in the range of from 10 bar abs to 40 bar abs, preferentially in the range from 15 to 35 bar abs, and more preferentially at about the same pressure than the syngas (with the same definition as already given). This is done through standard regulations well known from those skilled in the art.

It is not until the carbon dioxide is released that the rehydroxylation takes place (phase d). More specifically, with regard to the sorbent 13, once the carbonate is formed in the sorption phase, the carbon dioxide can be released and the rehydroxylation can take place. In line with the previous example, this corresponds to the reactions as follows:

MgCO₃ → MgO + CO₂

MgO + H₂O →Mg (OH)₂

As shown in this example, during the release portion of this phase, the magnesium carbonate is subjected to the noted temperatures (from 350°C to 420°C) to yield magnesium oxide and carbon dioxide. The temperature is maintained at this level for a period of time that is sufficient to allow for the release of the carbon dioxide. Once the carbon dioxide is released, for rehydroxylation (phase d), the temperature of the sorbent 13 is then reduced, using for instance a heat transfer media to a temperature from about 200°C to about 300°C in order to allow for the rehydroxylation of the sorbent 13. This phase (d) occurs while the sorbent 13 is being contacted with steam (7.3) or any other moisture containing stream (7.4). During the rehydroxylation phase, the magnesium oxide then reacts with water present (from the steam or other moisture containing stream) to yield magnesium hydroxide (a regenerated sorbent). The stream going out (14), mainly steam in excess or the gas introduced to bring moisture is sent to any process, for instance for heat recovery or recycled to the syngas producing unit 3. Once this phase is completed, the sorbent 13 reenters the sorption phase by being put again in contact with the syngas stream.

Since the release phase is carried out at "high temperature and high pressure", the resulting carbon dioxide stream is also a "high pressure/high temperature" carbon dioxide stream. This carbon dioxide stream produced can be utilized in several manners. First, all or a portion of the carbon dioxide stream can be recycled via line 11.1 to be used as a supplemental feed to the hydrocarbon feed stream provided in line 2 to the steam hydrocarbon reformer unit 3. The purpose of providing a portion of the carbon dioxide stream back to the steam hydrocarbon reformer unit 3 is to allow for the maximization of the production of carbon monoxide - supposing it is one of the desired products in the process-. In addition, as steam is used to release the carbon dioxide, any steam present in the carbon dioxide will also help in off setting the amount of steam that needs to be added for reforming. The remaining portion of the carbon dioxide stream, if any, can be utilized as carbon dioxide product as this stream is of high purity. This carbon dioxide product stream can be passed along via line 11.3 for further use.

When speaking about recycling high pressure, high temperature streams (carbon dioxide, steam, mixtures of them...), one means that these streams are taken (recycled) at the conditions in which they are produced -as noted in the text- , taking into account the thermal losses and pressure drops between the different units. The conditions at the recycle point could be different due to additional compression, expansion or to the passage in heat exchangers.

Besides carbon dioxide and steam used as a supplementary feed, heat can be recycled to the syngas producing unit through heat transfer media (molten salt, steam).

Note that this CO₂ capture and release process is essentially based on temperature differences between the phases and that it can be approximatively isobaric. The fact that all the beds could be at approximatively the same pressure, said within a range of 2 bar, helps to the design and regulation of the whole system.

Practically, the syngas stream and the sorbent 13 can be put in contact through 2 different ways:
- the sorbent is placed in several fixed beds and the different streams (syngas, CO CO₂ or superheated steam, high temperature super heated steam, steam or other moisture containing stream) are successively directed through the different beds, or
- the sorbent 13 is transported successively into several reactors (adsorbers) in which it follows the cycle: CO₂ sorption, optional purge, CO₂ release, rehydroxylation and again CO₂ sorption...

These two adsorption processes are well known to those skilled in the art and accordingly will not be discussed herein in great detail. Therefore, the present invention is not meant to be limited by the descriptions given here-below as examples. For purposes of simplicity, the process of the present invention will be again discussed with regard to a steam hydrocarbon reforming unit as syngas producing unit. Note again that this choice is in no way intended to limit the scope of the present invention.

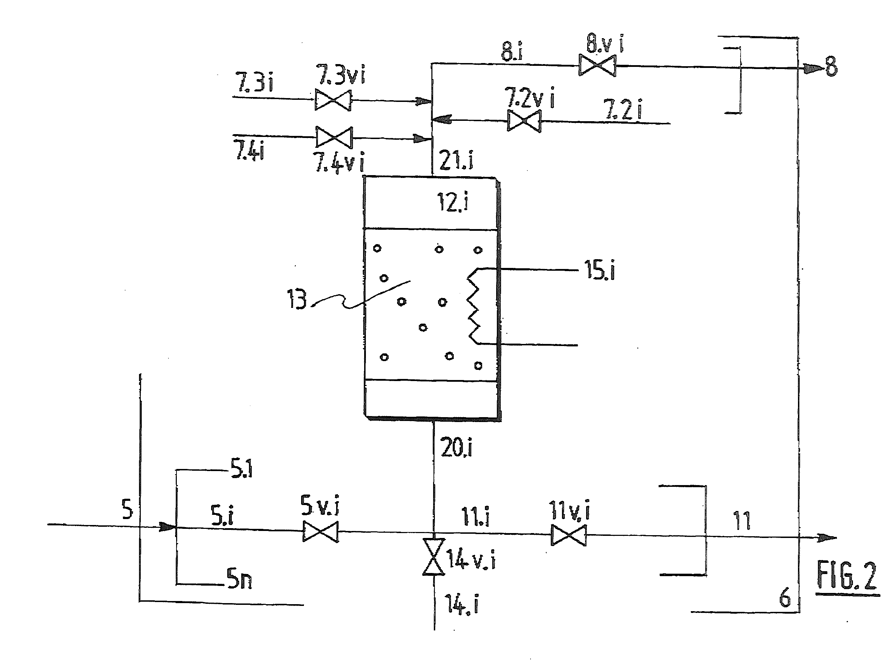

Figure 2 corresponds to the "fixed beds" process which is supposed in that description to be without purge phase.

Accordingly, the syngas stream that is obtained from the steam hydrocarbon reformer unit 3 via line 5(not shown in Fig 2) is subjected to treatment in a carbon dioxide removal unit 6 that contains at least one fixed sorbent bed 12 and preferably a plurality of N similar sorbent beds (12.1/ 12.2/ 12.3/.../12.i/ 12.n). Only one bed 12.i is depicted in Figure 2. This bed goes successively through the different phases of the process. As used herein, the phrases "fixed bed" or "fixed sorbent bed" refer to a sorbent bed 12 in which the sorbent 13 is fixed or positioned within the bed in such a manner that the sorbent does not readily move about within the sorbent bed 12 when the syngas, or other streams, is injected into the sorbent bed 12 (hence the term "fixed"). The carbon dioxide removal step is a batch process, and as the fixed bed (12.i) approaches being loaded with the desired amount of carbon dioxide, the feed can be switched over to the next bed.

Typically, multiple fixed sorbent beds (12.1,..., 12.n), manifolded together, are provided to go through the various phases of sorption, CO₂ release and rehydroxylation. Note the fixed sorbent beds 12 may be provided with heat transfer surfaces 15 to provide or transfer the heat from or to the process. Those skilled in the art will realize that this can be achieved in a number of different manners. Accordingly, the present invention is not meant to be limited to any one configuration for the fixed sorbent beds 12 provided that the fixed sorbent beds 12 include the sorbent 13 and provide one or more mechanisms for injecting/withdrawing the various gas streams (for example, the beds would include one or more flow reversible conduits (20, 21) which allow for the flow of gas in both directions. Each fixed sorbent bed 12.i allows for the injection of syngas from line 5 and 5.i into the fixed sorbent bed 12.i through 20.i and the exit of a stream that is essentially carbon dioxide free through 21.i and via line 8.i then line 8. When the carbon dioxide removal unit 3 contains more than one bed 12, the specific bed 12.i into which the syngas stream is injected can be controlled through the use of a variety of valves (5v.i/8v.i). Note that the period of time that the syngas stream passes through the fixed sorbent bed 12.i will depend upon the particular sorbent 13 utilized. As the sorbent 13 becomes saturated due to the carbon dioxide capacity of the sorbent 13 being reached (or almost being reached), the introduction of the syngas stream into the fixed sorbent bed 12.i is stopped

The next phase of the treatment in the carbon dioxide removal unit 6, the carbon dioxide release phase, provides a high purity carbon dioxide stream that is also "at high pressure and high temperature". This is accomplished by increasing the temperature of the fixed sorbent bed 12.i. This increase in temperature of the fixed sorbent bed 12.i may be accomplished in different manners. The temperature of the superheated steam stream provided via line 7.2.i and valve 7.2v.i can be high enough or additional heating means such as an indirect heat exchanger (15.i) may be used to increase the temperature of the sorbent 13 in the fixed sorbent bed 12.i from a temperature in the range 100°C / 315°C used in the CO2 captation phase up to 350°C to 420°C. In each of these cases, the temperature is increased to allow for the release of carbon dioxide from the sorbent 13 thereby producing a carbon dioxide stream that is not only hot but also wet. This "high pressure high temperature" carbon dioxide stream is withdrawn from the fixed sorbent bed 12.i via line 11.i and valve 11v.i. The pressure in the fixed sorbent bed 12.i during this phase is maintained at the desired pressure, above 10 bar abs, typically at a pressure that ranges from 10 bar to 40 bar abs, preferentially from 15 to 35 bar abs. More preferentially, this pressure will be approximatively the same than the pressure of the feed at the inlet of the syngas producing unit 3, these two pressures being within a 20 % range defined as Pmax/Pmin< 1.2

The temperature is maintained at a level from about 350°C to about 420°C for a period of time that is sufficient to allow for the release of the carbon dioxide. Once the carbon dioxide is released, the temperature in the fixed sorbent bed is then reduced using for instance heat transfer media down to a temperature in the range 200°C to 300°C in order to allow for the rehydroxylation of the sorbent 13. This part of the sorbent cycle occurs while the sorbent 13 in the fixed sorbent bed 12.i is being contacted with steam (7.3i) or any other moisture containing stream (7.4i) through valve 7.3v.i or 7.4v.i. Additional cooling means such as the indirect heat exchanger (15.i) may be used to decrease the temperature of the sorbent 13 in the fixed sorbent bed 12.i. During the rehydroxylation phase, the magnesium oxide then reacts with water present (from the steam or other moisture containing stream) to yield magnesium hydroxide (a regenerated sorbent).

Once this phase is completed, the fixed sorbent bed 12.i reenters the sorption phase by having syngas stream introduced once again into the fixed sorbent bed 12.i.

Those skilled in the art will recognize that this embodiment may be carried out with regard to any number of fixed sorbent beds 12. In the preferred embodiment of the present process, the schematic configuration utilized with regard to the carbon dioxide removal unit 6 is a configuration that contains at least three or four fixed sorbent beds 12 (at least three for when the purge phase is not included and four for when the purge phase is included). Accordingly, in such a configuration, rather than terminating the introduction of the syngas stream into the fixed sorbent bed 12, the stream is simply diverted to another fixed sorbent bed 12 which is in the sorption phase of the phases of treatment in the carbon dioxide removal unit 6. Therefore, in such configurations, it is possible to use multiple fixed sorbent beds 12 which are staggered with regard to one another in terms of these phases. By using a configuration which is the same or similar in nature to this, it is possible to constantly run the process without interruption. In other words, it is possible to run the process online continuously.

A still further embodiment of the present invention involves modifying the carbon dioxide removal unit 6 to allow for the recovery of the heat of sorption and the heat of rehydroxylation in the fixed sorbent beds 12 in order to either generate high pressure steam that can be utilized within the carbon dioxide removal unit 6 or that can be utilized in the steam hydrocarbon reformer unit 3 or to utilize the heat transfer media as a source of heat in the reforming process. The modified carbon dioxide removal unit 6 would therefore comprise at least one fixed sorbent bed 12 that contains sorbent 13 and a series of heat transfer surfaces (not shown) that run through the bed. The heat transfer surfaces would be arranged in any configuration that would maximize their contact with the sorbent 13. Each of the heat transfer surfaces would have a heat transfer media running there through so that when the fixed sorbent bed enters either the sorption phase or the rehydroxylation phase, this media could be run through the heat transfer surfaces and allowed to adsorb the heat of sorption or the heat of rehydroxylation. More specifically, the heat transfer media would be used to generate high pressure steam for the carbon dioxide removal unit 6 or the steam hydrocarbon reformer 3 or as a source of heat for the reforming process. Similarly heat transfer media running through the bed undergoing carbon dioxide release phase will provide heat required for release, the reforming process being a source of heat. A variety of different types of heat transfer media are available to be utilized in this manner. Examples of such heat transfer media include, but are not limited to, a molten carbonate salt mixture or any inorganic or organic compound with a boiling point that ranges from about 250°C to about 350°C.

A thermo-compressor can be provided if the pressure of carbon dioxide during release is not sufficient to be recycled directly back to the steam hydrocarbon reformer unit 3. The thermo-compressor uses a 20 to 60 bar high pressure steam as motive force. The motive steam supplied ends up in that case being used in the steam hydrocarbon reformer 3 for the reforming of hydrocarbons. Thus, the motive steam provides mechanical energy to increase pressure of the carbon dioxide stream and water vapors for steam reforming. Those skilled in the art will recognize the limitations of the thermo-compressors in terms of available pressure rise.

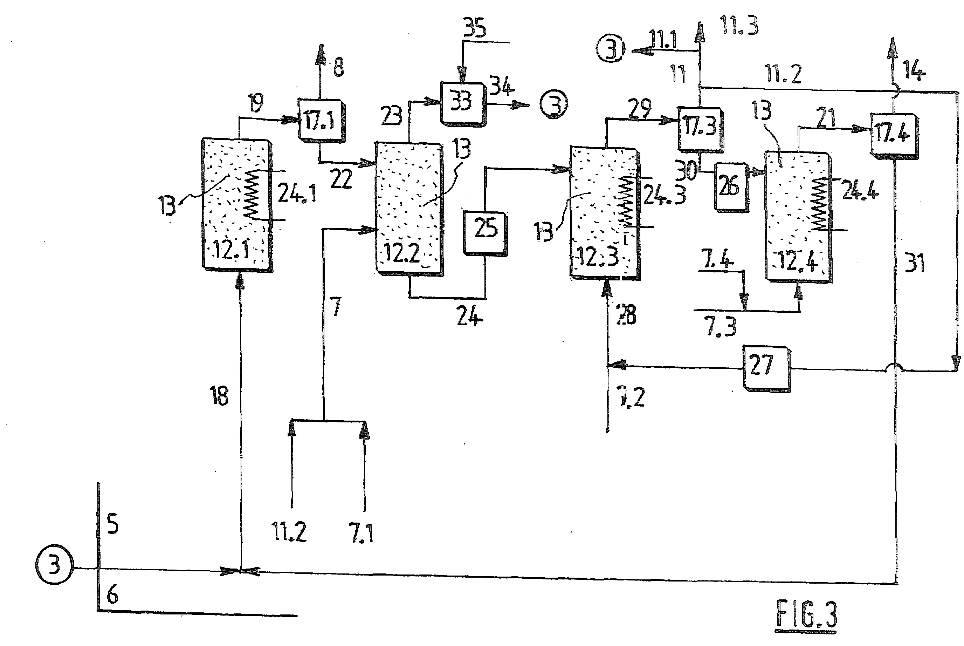

Another well known adsorption process is to use a Moving Adsorbent System. In that case, the sorbent 13 is transported successively into several reactors (adsorbers) in which it follows the cycle : CO₂ adsorption, optional purge, CO₂ release, rehydroxylation , then it is ready for a new CO₂ adsorption and goes again to the first reactor... Figure 3 corresponds to the case where the cycle contains a purge step (b)

The syngas stream that is obtained from syngas producing unit 3 via line 5 (not shown in Fig 3) is cooled and then subjected to treatment in a carbon dioxide removal unit 6 that contains at least four sorbent beds 12 (individually labeled as 12.1, 12.2, 12.3, and 12.4), that are configured to allow for the use of a magnesium based sorbent 13 with each of the sorbent beds 12 corresponding to a different phase.

The sorbent 13 in this fluidized/moving bed process is typically found in the form of small beads, granules, or crumbs of the sorbent 13 that are small enough in size to allow for these forms to be easily fluidized or gas transported.

Those skilled in the art of moving/fluidized beds will recognize that fluidization requires the gas stream to lift and move the solids, and special separators to separate the gas from the solids. Similarly, moving beds require moving grates, conveyors, etc. Such various manners of fluidization or gas transport are well known to those skilled in the art therefore details are not included herein. The ability to move the sorbent around makes it a continuous and steady state process, as compared to a batch process for fixed beds.

Those skilled in the art will recognize that the present process may be carried out using any number of sorbent beds 12 provided that at least one bed 12 corresponds to each phase of the process and that flow between such beds 12 can be controlled by any means known in the art such as through strategically placed lines and valves. In one preferred embodiment of the present process as set forth in Figure 3, the schematic configuration utilized is a configuration that contains four sorbent beds 12 with one sorbent bed 12 utilized in each phase of the process.

The sorbent 13 passes through the series of sorbent beds 12 which correspond to the various phases of carbon dioxide removal within the carbon dioxide removal system: the sorption phase (sorbent bed 12.1), the purge phase (sorbent bed 12.2), the carbon dioxide release phase (sorbent bed 12.3) and the rehydroxylation phase (sorbent bed 12.4). With regard to the example set forth in Figure 3, the syngas from line 5 is typically injected into the first sorbent bed 12.1 along with a supply of sorbent 13 via line 18, sorbent recycled from the bed 12.4 via the separator 17.4... Note the method of conveying sorbent by gas is well known to those familiar with the art, and is not discussed or shown herein. Similarly, separation of gas from sorbent, shown as 17.1, 17.3, and 17.4 in Figure 3 is well known to those familiar with the art.

As the sorbent 13/syngas stream pass through the first sorbent bed 12.1, the carbon dioxide in the syngas stream selectively reacts with the sorbent 13 resulting in the production of a mixture comprising reacted sorbent and a hydrogen/carbon monoxide syngas gaseous stream. As the syngas and reacted sorbent 13 pass through the fluidized sorbent bed 12.1, the components of the syngas (mainly carbon dioxide) that react with the sorbent 13 are retained on (affixed to) the sorbent 13.

Note that the residence time of sorbent in the first sorbent bed 12.1 will depend upon the particular sorbent 13 utilized.

The mixture of the unreacted syngas along with reacted sorbent 13 exits the sorbent bed 12.1 via line 19 and is then passed to a phase separator 17.1 where unreacted syngas is separated from the reacted sorbent 13. The unreacted syngas stream comprises both hydrogen and carbon monoxide in high concentrations and is essentially carbon dioxide free.

Note that the temperature at which the syngas stream is introduced into the sorbent bed 12.1 will depend upon the specific sorbent 13 utilized as well as the conditions under which the reaction is carried out. Typically, the syngas stream will be introduced into the first sorbent bed 12.1 at a temperature that ranges from 100°C to 315°C and at a pressure that ranges from 10 to about 40 bar abs, preferably at a temperature that ranges from about 180°C to about 300°C and at a pressure from 15 to 35 bar abs.

With regard to the actual chemical reaction taking place with regard to the sorbent 13, the sorbent 13 reacts with the carbon dioxide in the syngas stream to produce a carbonate and water.

Mg (OH)₂ + CO₂ → MgCO₃ + H₂O

As noted above, the phase separator 17.1 separates the sorbent from the remaining components of the unreacted syngas stream. The unreacted syngas stream is sent via line 8 to the hydrogen/carbon monoxide separation unit 9 (not shown) for further treatment.

The next phase in the carbon dioxide removal unit 6 is the purging of the sorbent 13 in order to remove those entrained components. The sorbent 13 that results from separator 17.1 is introduced into a second sorbent bed 12.2 from line 22 along with high pressure superheated steam from line 7.1 and/or carbon dioxide via line 11.2, then via line 7. As a result, the reacted sorbent 13 is purged of the non specifically trapped components from the syngas stream thereby producing a purge effluent gas. The amount of steam required for the purge may not be adequate to fluidize the sorbent 13 in bed 12.2 and therefore it may be preferential to use a moving bed to remove the sorbent 13 from the bottom of the bed 12.2.

This purge effluent gas is withdrawn from the second sorbent bed 12.2 via line 23 and passed on to a thermo-compressor 33. The purge effluent gas is then recycled via line 34 along with the superheated steam injected via line 35 into the thermo-compressor 33 to the hydrocarbon reformer unit 3. Accordingly, the thermal energy in hot purge effluent gas is utilized in the steam hydrocarbon reforming step. This purge effluent gas which contains hydrogen, carbon monoxide and methane is used as a supplemental feed to maximize the production of hydrogen and carbon monoxide. The purged sorbent 13 is then passed to the third sorbent bed 12.3 via line 24 for the next phase of treatment in the carbon dioxide removal unit 6-the carbon dioxide release phase.

In the third phase of treatment, the carbon dioxide is released from the sorbent 13 in the third sorbent bed 12.3 producing a high purity carbon dioxide stream that is also at "high pressure and high temperature". This is accomplished by increasing the temperature of the purged sorbent 13 in a first heat exchanger 25 and within the third sorbent bed 12.3. A portion of the carbon dioxide recycle stream (11.2) can be added along with steam via line 7.2 to provide via line 28 additional gas flow required for fluidization of the sorbent bed 12.3. The increase in temperature of the third sorbent bed 12.3 may be achieved in three ways or combinations thereof. The temperature of the superheated steam stream provided via line 7.2 can be increased, the temperature of the recycle carbon dioxide provided via line11.2 can be increased through the use of a heat exchanger 27, and/or by additional heating means such as an indirect heat exchanger 24 (here 24.3) may be used to increase the temperature of the purged sorbent 13 in the third sorbent bed 12.3 up to 350°C / 420°C. In each of these cases, the increase in temperature is to allow for the release of carbon dioxide from the sorbent 13 thereby producing a carbon dioxide stream that is not only hot but also wet. The pressure within the third sorbent bed 12.3 at this point is generally slightly below the pressure in the second phase (the second sorbent bed 12.2).

The mixture of sorbent 13 and the carbon dioxide gas steam is then passed along via line 29 to a phase separator 17.3 where the carbon dioxide gas is separated from the sorbent 13. The carbon dioxide gas stream is extracted via line 11 then routed for use as product (11.3) or recycled back to the reformer 3 via line 11.1. The sorbent 13 is passed along line 30 to a final and fourth sorbent bed 12.4 for the rehydroxylation of the sorbent 13 to take place.

Within the fourth sorbent bed 12.4, the sorbent is subjected to a reduced temperature to allow for the rehydroxylation. More specifically, the temperature is in the range from 200°C to 300°C in order to allow for the rehydroxylation of the sorbent 13. During rehydroxylation, the sorbent 13 in the sorbent bed 12.4 is being contacted with the steam and/or any other moisture containing stream supplied via lines 7.3 and/or 7.4. The sorbent may be cooled indirectly in a heat exchanger 26 upstream of sorbent bed 12.4.

During the rehydroxylation portion of this phase, magnesium oxide reacts (via hydroxylation) with water present in the steam or in other moisture containing stream to yield magnesium hydroxide (a regenerated sorbent). The mixture of steam and/or any other moisture containing stream and the rehydroxylated sorbent 13 is withdrawn from the fourth sorbent bed 12.4 via line 21 and passed to the phase separator 17.4 where they are separated and the rehydroxylated sorbent 13 is recycled via line 31 to line 18 where it can be reutilized to treat the syngas stream being injected into the first sorbent bed 12.1. The remaining steam and/or other moisture containing stream is withdrawn via line 14 and either condensed or used elsewhere, preferentially in the syngas producing unit..

The carbon dioxide stream produced can be utilized in two manners. First, as noted above, all or a portion of the carbon dioxide stream can be recycled via line 11.1 to be used as a supplemental feed to the hydrocarbon feed stream provided in line 2 to the steam hydrocarbon reformer unit 3 (or in the other embodiments to the auto thermal reformer unit or the partial oxidation unit). Note that prior to the carbon dioxide stream being recycled to the steam hydrocarbon reformer unit 3, the pressure of carbon dioxide may need to be raised by a thermo-compressor (not shown) which is supplied with additional high pressure steam . This thermo-compressor is utilized as the pressure of the carbon dioxide during release may not being sufficient to be recycled back to the steam hydrocarbon reformer unit 3. The thermo-compressor uses from 20 to 60 bar high pressure steam as motive force. The motive steam ends up being used for the reforming of hydrocarbons in the steam hydrocarbon reformer 3. Thus, the motive steam provides mechanical energy to increase pressure of the carbon dioxide stream and water vapors for steam reforming. Those skilled in the art will recognize the limitations of the thermo-compressors in terms of available pressure rise.

The remaining portion of the carbon dioxide stream, if any, can be utilized as carbon dioxide product as this stream is of high purity. This carbon dioxide product stream can be withdrawn for further use via line 11.3.

As noted above, the hydrogen/carbon monoxide gaseous stream obtained in the first phase (the sorption phase) may be withdrawn and used as product or routed for further treated in the hydrogen/carbon monoxide separation unit 9.

A still further embodiment of the present invention involves modifying the carbon dioxide removal unit 6 to allow for the recovery of the heat of sorption and the heat of rehydroxylation in the sorbent beds 12.1 and 12.4 in order to either generate high pressure steam or hot heat transfer media which can be utilized within the carbon dioxide removal unit 6 or in the steam hydrocarbon reformer unit 3. The modified carbon dioxide removal unit 6 would therefore comprise at least four sorbent beds 12.1, 12.2, 12.3 and 12.4 containing sorbent 13 and a series of heat transfer surfaces 24 (24.1, 24.3, 24.4) that run through at least beds 12.1 (the sorption phase), 12.3 (the carbon dioxide release phase), and 12.4 (the rehydroxylation phase). The heat transfer surfaces would each have a media running there through to adsorb the heat of sorption or the heat of rehydroxylation, and provide heat for carbon dioxide release. More specifically, the heat transfer media would be used to exchange heat between the carbon dioxide removal unit 6 and various process streams of the steam hydrocarbon reformer 3, and/or generate high pressure steam for the carbon dioxide removal unit 6. A variety of different types of heat transfer media are available to be utilized in this manner. Examples of such heat transfer media include, but are not limited to, a molten carbonate salt mixture or any inorganic or organic compound with a boiling point that ranges from about 250°C to about 350°C.

Thus, both in case of fixed bed or moving sorbent, the characteristics of this magnesium sorbent based process for carbon dioxide removal is that streams issued from this unit are recycled at "high pressure and high temperature" (as defined here above) to the syngas producing unit and used as supplementary feed and/or energy, resulting in an overall process that is more efficient from a cost and energy standpoint than independent units.

### Elements of the Figures:

### Figure 1

1 -hydrocarbon feed stream source
2 - line that provides hydrocarbon feed steams to the Syngas Producing unit
3 - Syngas Producing unit (reformer unit)
4 - line for the injection of steam
5 - line that provides syngas from the Syngas Producing unit to the carbon dioxide removal unit
6 - carbon dioxide removal unit
7 - line that introduces sorbent purge gas into the carbon dioxide removal unit
7.1 / 7.2 / 7.3 / 7.4 - lines for the injection of steam (or gas containing steam) into the carbon dioxide removal unit
8 - line that introduces the carbon dioxide depleted stream into the hydrogen/carbon monoxide separation unit
9 - hydrogen/ carbon monoxide separation unit
10 - line by which the purge effluent gas is withdrawn from the carbon dioxide removal unit and recycled to the line 2 that provides the hydrocarbon feed streams to the Syngas Producing unit
11 - line by which the "high temperature high pressure" carbon dioxide purified stream is withdrawn (11.1 for recycling to line 2 / 11.2 for purging sorbent / 11.3 for production)
13 - sorbent
14 - line by which the rehydroxylation phase effluent gas is withdrawn from the carbon dioxide removal unit
15 - heat exchanger
16 - purge surge drum

### Figure 2 (other elements)

5 .i- line that provides syngas streams to the sorbent bed 12.i
7.2i / 7.3i / 7.4i - lines for the injection of steam into the sorbent bed 12.i
8.i - line that introduces the carbon dioxide depleted stream from the sorbent bed 12.i into the line 8 (to hydrogen/ carbon monoxide separation unit)
11.i - line by which the" high temperature high pressure" carbon dioxide stream is withdrawn from the sorbent bed 12.i
12.i - fixed sorbent bed i
14.i - line by which the rehydroxylation phase effluent gas is withdrawn from the sorbent bed 12.i
15.i - sorbent bed 12.i heat exchanger
7 v.i - valve on line 7.i
8 v.i - valve on line 8.i
10 v.i - valve on line 10.i
11 v.i - valve on line 11.i
14 v.i - valve on line 14.i
20.i - inlet / outlet pipe of sorbent bed 12.i
21.i - inlet / outlet pipe of sorbent bed 12.i (opposite 20.i)

### Figure 3 (other elements)

12.1 - sorbent bed (CO CO₂ sorption)
12.2 - sorbent bed (purge)
12.3 - sorbent bed (CO CO₂ release)
12.4 - sorbent bed (rehydroxylation)
17.1 /17.3 / 17.4 - gas/sorbent separator
18 -line for the supply of sorbent 13 and syngas to sorbent bed 12.1
19- line for the exit of the unreacted syngas along with reacted sorbent 13 from the sorbent bed 12.1
21- line for the exit of the rehydroxylated sorbent along with the rehydroxylation phase effluent gas from the sorbent bed 12.4 to the separator 17.4
22-line for the supply of sorbent 13 from separator 17.1 to the sorbent bed 12.2.
23- line for withdrawing the purge effluent gas on to a thermo-compressor 33.
24 - line for the supply of the purged sorbent to sorbent bed 12.3
24.1 / 24.3 /24.4 heat exchanger (internal to bed)
25- heat exchanger
26 - heat exchanger
27 - heat exchanger
28 - line for the supply of steam (via 7.2) and/or CO CO₂ (via 11.2 and 27) to the sorbent bed 12.3
29 - line for the exit of CO CO₂ and of sorbent 13 (upstream separator 17.3)
30 - line for the supply of sorbent 13 to sorbent bed 12.4 (downstream separator 17.3)
31 - line for the supply of rehydroxylated sorbent 13 from separator 17.4 to sorbent bed 12.1 via line 18
33 - thermo compressor
34 - line for recycling the purge effluent gas and motive steam to the syngas producing unit 3
35 - supply line for the motive steam (to thermo compressor 33)

## Claims

1. A process for recovering a carbon dioxide stream during hydrogen and/or carbon monoxide and/or hydrogen-carbon monoxide mixture(s) production, said process comprising:
(i) the introduction of one or more hydrocarbon feed streams into a syngas producing unit 3 to generate a syngas stream that contains at least hydrogen, carbon monoxide, carbon dioxide and water vapor;
(ii) the treatment of the syngas stream in a carbon dioxide removal unit 6 with a magnesium based sorbent to produce a CO₂ depleted hydrogen/carbon monoxide gaseous stream, the treatment involving:
- a sorption phase (a) in which the syngas stream and the magnesium based sorbent are put in contact at a temperature from 100°C to 315°C and a pressure from 10 to 40 bar abs, preferably at a temperature from 180°C to 300°C and at a pressure from 15 to 35 bar abs, the carbon dioxide in the syngas stream selectively reacting with the sorbent and the remaining components of the syngas stream non specifically reacting with the sorbent producing a CO₂ depleted hydrogen/carbon monoxide gaseous stream,
- a carbon dioxide release phase (c) in which the sorbent is put in contact with superheated steam, to raise the temperature of the sorbent in the range 350°C / 420°C thereby allowing for the release of the carbon dioxide from the sorbent to produce a carbon dioxide deficient sorbent and a wet carbon dioxide stream;
- a rehydroxylation phase (d) in which the carbon dioxide deficient sorbent temperature is lowered to a temperature between 200°C and 300°C and is contacted with steam and/or a moisture containing steam to allow for the rehydroxylation of the sorbent, the rehydroxylated sorbent being then used again for a new sorption phase;
wherein at least a stream containing CO₂ and/or steam is produced in unit 6 at a pressure above 10 bar abs and a temperature above 200°C and is recycled to the syngas producing unit 3.

2. Process according to claim 1, wherein the treatment of the syngas stream comprises a purge phase (b) between the phase (a) and the phase (c), in which the reacted sorbent is swept by a stream in order to purge the reacted sorbent of the non specifically trapped components from the syngas stream thereby producing a purge effluent gas.

3. Process according to claim 1, wherein at least a portion of the wet carbon dioxide stream is recycled to the syngas producing unit, preferentially in the feed stream.

4. Process according to claim 2, wherein at least a portion of the purge effluent gas is recycled to the syngas producing unit, preferentially in the feed stream.

5. Process according to claim 1, wherein at least a portion of the effluent gas from the rehydroxylation phase is recycled to the syngas producing unit, preferentially in the feed stream.

6. Process according to claim 2, wherein the optional purge stream used to sweep the sorbent is steam and/or a portion of the carbon dioxide stream.

7. Process according to one of claims 1 to 6, wherein the stream which is recycled from unit 6 to the syngas producing unit 3 is produced at a pressure that ranges from 10 bar to 40 bar abs, preferentially from 15 to 35 bar abs.

8. Process according to one of claims 1 to 6, wherein the stream which is recycled from unit 6 to the syngas producing unit 3 is produced at a pressure approximatively the same than the pressure of the feed at the inlet of the syngas producing unit 3, the two pressures being within a 20 % range defined as Pmax/Pmin< 1.2

9. Process according to one of claims 1 to 8, wherein the stream which is recycled from unit 6 to the syngas producing unit 3 is produced at a temperature in the range 250 to 420°C.

10. Process according to claim 1, wherein heat is exchanged between the carbon dioxide removal unit 6 and the syngas producing unit 6 through a heat transfer media, preferentially this heat transfer media being an inorganic or organic compound with a boiling point that ranges about 250°C to about 350°C, more preferentially this heat transfer media being a molten carbonate salt mixture.

11. Process according to one of claims 1 to 10, wherein the syngas producing unit is selected from a steam hydrocarbon reformer unit, preferentially a steam methane reformer unit, an autothermal reformer unit, and a partial oxidation unit or a combination of these units.

12. Process according to one of claims 1 to 11, wherein the magnesium based sorbent used in the sorbent beds is magnesium hydroxide.

13. Process according to one of claims 1 to 12, wherein the pressure is approximatively the same, within a maximum difference of 2 bar, in all sorbent beds.

14. Process according to one of claims 1 to 13, wherein at least one and preferably each of the sorbent beds includes means for heating and cooling the sorbent bed.

15. Process according to one of claims 1 to 14, wherein the sorbent is placed in several fixed beds and the different streams are successively and cyclically directed through the different beds according to phases (a) to (d).

16. Process according to one of claims 1 to 15, wherein the sorbent is transported successively and cyclically into different adsorbers according to phases (a) to (d).

17. Process according to one of claims 1 to 16, wherein the CO₂ depleted hydrogen/carbon monoxide gaseous stream is further treated to separate at least partly the hydrogen from the carbon monoxide using a hydrogen/carbon monoxide separation unit selected from a hydrogen pressure swing adsorption unit, a CO pressure swing adsorption unit, a membrane unit or a cryogenic purification unit, or a combination of these to produce high purity hydrogen and/or high purity carbon monoxide and/or hydrogen-carbon monoxide mixture at the required H₂/CO ratio.
